**Europäisches Patentamt**

**European Patent Office**

**Office européen des brevets**

(19)

(11) Numéro de publication : **0 305 252 B1**

(12) # FASCICULE DE BREVET EUROPEEN

(45) Date de publication du fascicule du brevet :
**05.06.91 Bulletin 91/23**

(51) Int. Cl.$^5$ : **F16K 27/00, F16K 11/07**

(21) Numéro de dépôt : **88402011.6**

(22) Date de dépôt : **02.08.88**

---

(54) **Distributeur pneumatique ou électropneumatique multifonction.**

---

(30) Priorité : **06.08.87 FR 8711192**

(43) Date de publication de la demande :
**01.03.89 Bulletin 89/09**

(45) Mention de la délivrance du brevet :
**05.06.91 Bulletin 91/23**

(84) Etats contractants désignés :
**AT BE CH DE ES GB GR IT LI LU NL SE**

(56) Documents cités :
**EP-A- 0 103 564**
**EP-A- 0 108 286**
**EP-A- 0 134 185**
**DE-A- 3 114 129**
**FR-A- 2 474 633**

(73) Titulaire : **JOUCOMATIC S.A.**
**32, Avenue Albert-1er**
**F-92506 Rueil-Malmaison (FR)**

(72) Inventeur : **Boniface, Jean-Claude**
**26 résidence des taratres**
**F-92- Rueil-Malmaison (FR)**
Inventeur : **Valet, Thierry**
**38 rue Quetigny**
**F-93- Epinay sur Seine (FR)**
Inventeur : **Juhel, Bernard**
**128 rue Paul Vaillant Couturier**
**F-92- Nanterre (FR)**

(74) Mandataire : **Armengaud Ainé, Alain**
**Cabinet ARMENGAUD AINE 3 Avenue**
**Bugeaud**
**F-75116 Paris (FR)**

### Description

La présente invention a pour objet un distributeur pneumatique ou électropneumatique multifonction.

On sait que les distributeurs pneumatiques actuellement réalisés et commercialisés se présentent sous la forme d'un corps muni d'un plan de pose pour assurer son montage sur l'embase reliée au dispositif pneumatique ou hydraulique à commander, dans lequel peut coulisser un tiroir assurant la distribution du fluide de commande hydraulique ou pneumatique. Ce tiroir est généralement actionné par l'intermédiaire d'un moyen de commande de préférence constitué d'un piston, logé à l'une des extrémités du corps du distributeur, un système de rappel logé à l'autre extrémité agissant à l'encontre de ce moyen de commande pour solliciter, dans l'autre sens, le tiroir de distribution.

Les multiples applications des distributeurs à tiroirs conduisent généralement les fabricants à en prévoir de nombreux types dont les dimensions varient en fonction des utilisations, ce qui présente des inconvénients, notamment au niveau des stocks.

Pour tenter de résoudre les problèmes ainsi posés, on a réalisé -FR-A-2474633, des distributeurs à tiroirs dans lesquels le tiroir coulisse au travers d'un élément d'étanchéité constitué par l'assemblage de bagues d'appui munies de joints d'étanchéité, ces bagues d'appui verrouillées les unes sur les autres étant placées dans un corps de distributeur classique comportant les moyens de passage du fluide de commande.

On connait par ailleurs EP-A-0103564, un distributeur à tiroir dont le corps est composé par l'assemblage et le verrouillage les uns à la suite des autres, avec interposition des joint d'étanchéité, de segments ou modules identiques, munis d'un alésage axial au travers duquel passe le tiroir, les modules étant pourvus d'un canal de passage pour le fluide de commande.

Ces solutions connues ne donnant pas totalement satisfaction car elles ne permettent pas de réaliser des distributeurs réellement modulaires, la présente invention se propose d'apporter un distributeur pneumatique ou électropneumatique multifonction du type modulaire, permettant la réalisation de nombreux types de distributeurs par simple modification du nombre de modules, les distributeurs pouvant s'adapter immédiatement à tout type de plan de pose de l'embase qui est reliée au dispositif devant être commandé par ce distributeur.

Cette invention concerne donc un distributeur pneumatique ou électropneumatique multifonction du type à tiroir constitué par l'alignement, l'assemblage et le verrouillage les uns à la suite des autres avec interposition de joints, de modules munis chacun d'un alésage central au travers duquel peut coulisser le tiroir de distributeur, chaque module étant pourvu des voies de passage pour le fluide de commande de manière que les modules constituent après assemblage et verrouillage le corps du distributeur dont les extrémités sont obturées par des couvercles recevant les organes de commande et de rappel du tiroir, caractérisé en ce que :

– chaque module comporte au moins un orifice venant se positionner sur une embase reliée au dispositif commandé par le distributeur ;

– les modules assemblés sont protégés par une enveloppe extérieure formant armature ;

– les modules et les couvercles d'extrémités sont verrouillés les uns sur les autres par encliquetage à l'aide de pattes et de tétons associés ;

– on prévoit entre les différents modules des logements destinés à recevoir les écrous de fixation des pilotes, ces écrous devenant imperdables lorsque l'enveloppe extérieure vient recouvrir le corps du distributeur constitué par l'assemblage de différents modules et ;

– le montage sur l'embase reliée au dispositif à commander s'effectue par l'intermédiaire de vis de montage logées dans des alésages et immobilisées à l'aide de pattes prévues sur les modules venant faire saillie dans lesdits alésages.

Selon une caractéristique de la présente invention, les modules et couvercles sont réalisés en matière plastique et l'enveloppe extérieure, formant armature, est métallique,

Selon un exemple de réalisation préféré, les modules comportent sur la face qui délimite le plan de pose du distributeur et qui est fixée sur une embase, un logement pour un joint qui est interposé entre ce plan de pose et ladite embase. De préférence, ce joint assure séparément l'étanchéité de chacun des modules et des couvercles sur l'embase. Il est en fait constitué de plusieurs joints de préférence de forme oblongue liés les uns aux autres. '

Selon un mode de réalisation préféré, le système de joint qui assure l'étanchéité dans le corps du distributeur entre le tiroir de distribution et l'assemblage des modules, comporte d'une part un joint torique classique et d'autre part un joint en T au contact du tiroir.

D'autres caractéristiques et avantages de la présente invention ressortiront de la description faite ci-après en référence aux dessins annexés qui en illustrent un exemple de réalisation dépourvu de tout caractère limitatif. Sur les dessins :

La figure 1 est une vue en plan et coupe horizontale d'un distributeur à tiroirs multifonction conforme à la présente invention ;

Les figures 2, 3 et 4 sont respectivement des vues en élévation frontale, latérale et en plan montrant l'assemblage par encliquetage de deux modules entrant dans la composition du distributeur illustré par la figure 1 ;

La figure 5 est une vue de dessus représentant la face supérieure du distributeur objet de la présente invention.

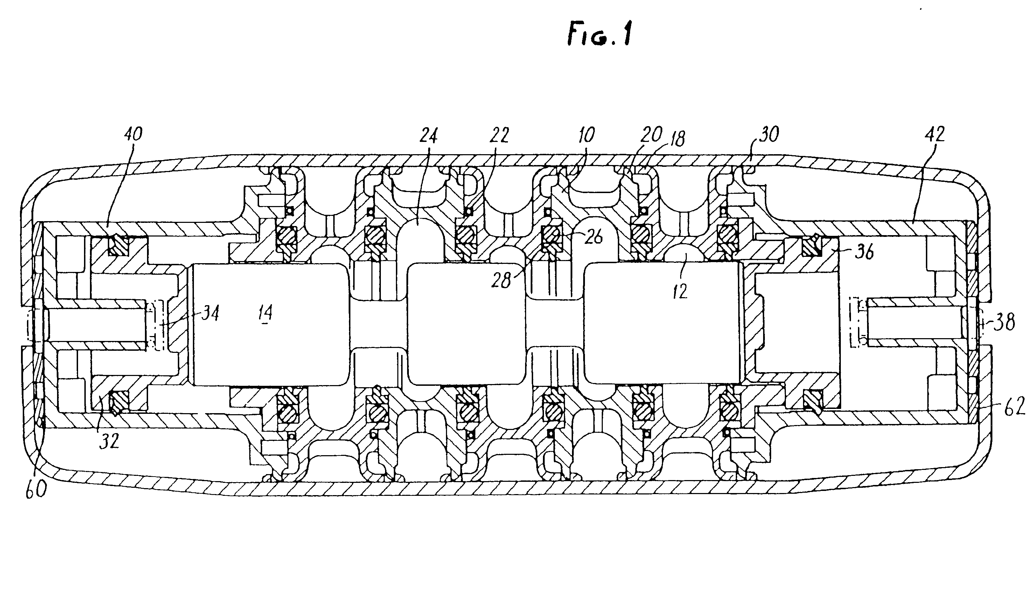

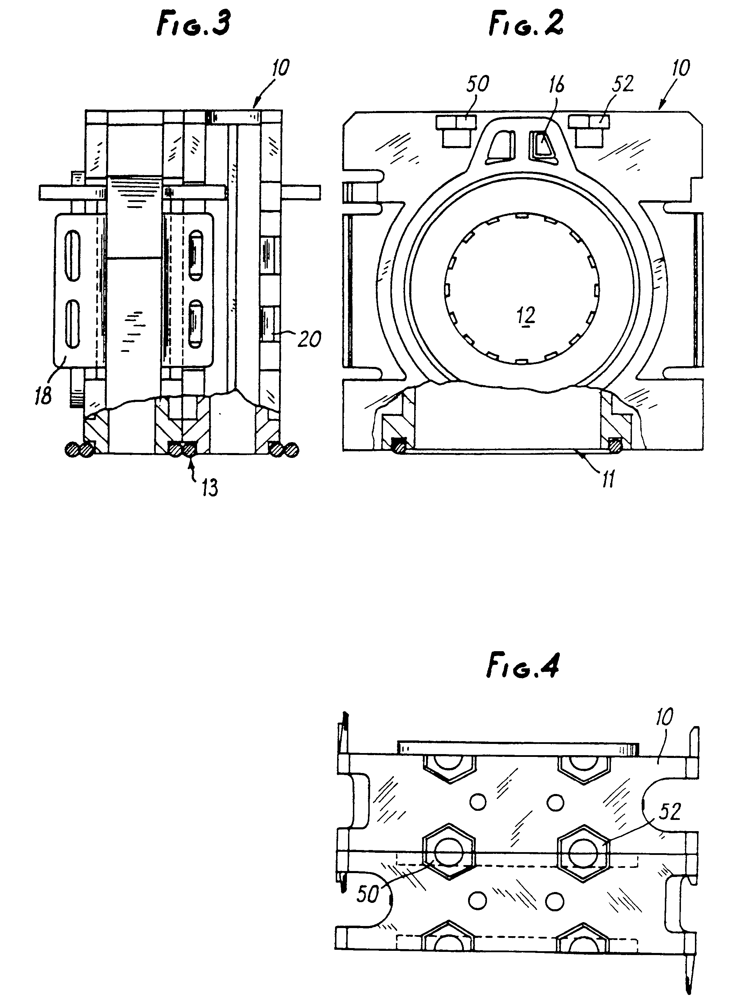

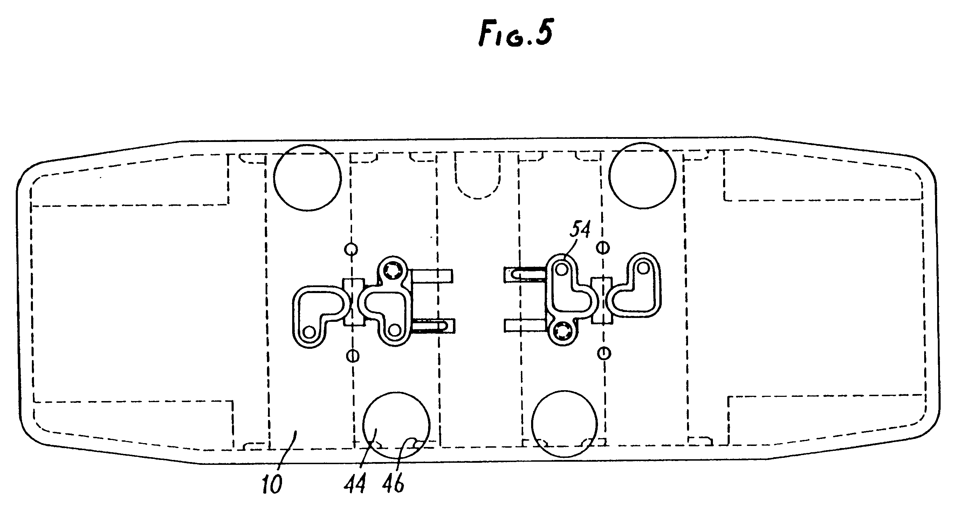

En se référant aux dessins et plus particulièrement aux figures 1 à 4, on voit que le distributeur multifonction selon la présente invention est constitué par l'assemblage d'une pluralité de modules 10 alignés les uns à la suite des autres. Dans cet exemple de réalisation non limitatif, le distributeur comporte cinq modules 10. Comme on le verra ci-après, ces modules sont verrouillés les uns sur les autres par encliquetage. Chaque module 10 comporte un alésage central 12 au travers duquel peut coulisser le tiroir de distribution 14, des voies de passage 16 pour le fluide de commande, ces voies étant au départ d'usine, obturées par un mince opercule que l'utilisateur peut détacher facilement de façon à réaliser les circuits de commande de fluide désirés et un orifice 11 qui vient se positionner sur le plan de pose de l'embase reliée au dispositif devant être commandé par ce distributeur. Pour assurer l'assemblage par encliquetage de deux modules consécutifs, chacun de ces derniers est muni d'une patte telle que 18, venant s'engager dans un téton 20 prévu sur le module adjacent de façon à assurer le verrouillage des modules alignés les uns à la suite des autres. La figure 1 montre clairement comment est réalisé le montage des différents modules. Des joints toriques de préférence 22 sont interposés entre les différents modules 10 de manière à assurer l'étanchéité du corps de distributeur ainsi réalisé et l'on prévoit par ailleurs un système de joint pour assurer l'étanchéité de ce corps de distributeur vis à vis de l'alésage 24 au travers duquel coulisse le tiroir de distribution 14.

Dans cet exemple de réalisation, quine présente aucun caractère limitatif, ce dernier système de joint comporte d'une part un joint torique 26 et d'autre part un joint en T 28 qui vient au contact du tiroir de distribution comme le montre la figure 1. L'ensemble du corps du distributeur ainsi réalisé par l'assemblage des différents modules est protégé par une enveloppe extérieure 30 formant couvercle, cette enveloppe extérieure venant couvrir l'ensemble module et couvercle.

A chaque extrémité du corps du distributeur, on a prévu d'une part l'organe de commande du tiroir de distribution et, d'autre part, l'organe de rappel de ce tiroir. Dans l'exemple illustré par les figures, l'organe de commande est réalisé sous la forme d'un piston 32. L'organe de rappel est réalisé de la même façon sous la forme d'un piston 36. Les extrémités du corps du distributeur contenant respectivement les organes de commande et de rappel du tiroir 14 sont protégées à l'aide de couvercles 40, 42 qui, dans cet exemple de réalisation, viennent s'encliqueter sur le corps du distributeur réalisé par l'assemblage des différents modules 10 alignés les uns à la suite des autres. Les poussoirs 34 et 38 faisant office de commande manuelle auxiliaire.

Selon l'invention, on interpose des cales 60 et 62 en vue de pallier aux jeux axiaux entre l'assemblage des modules 10 des couvercles 40 42 et de l'enveloppe extérieure 30.

De préférence, les différents modules sont réalisés en matière plastique de même que les couvercles 40 et 42, et l'enveloppe extérieure 30 est réalisée en métal. Le distributeur ainsi réalisé est monté par son plan de pose sur l'embase reliée au dispositif à commander. On utilise à cet effet de préférence des vis de montage logées dans les alésages 44, les modules 10 étant munis de pattes 46 venant faire saillie dans les alésages 44 de manière à rendre imperdables lesdites vis. L'étanchéité des modules et couvercles sur l'embase est assurée par un joint interposé entre le plan de pose et l'embase, ce joint 13 étant réalisé de préférence en plusieurs éléments de forme oblongue liés les uns aux autres.

Entre les différents modules 10 (voir figure 4) on prévoit des logements comportant six pans 50, 52 qui sont destinés à recevoir les écrous de fixation des pilotes, ces écrous devenant imperdables lorsque le couvercle vient recouvrir le corps du distributeur constitué par l'assemblage des différents modules 10.

Ainsi qu'on l'a représenté sur la figure 5, les joints d'étanchéité 54 insérés dans l'enveloppe 30 et s'interposant entre les modules 10 et le dispositif de commande, sont conçus de manière à servir de sélecteurs de circuit de pilotage, selon la position qui leur est donnée. Un tel système de joints a été décrit dans le brevet français N° 76 01 958 déposé le 26 Janvier 1976 par la présente titulaire et publiée sous le numéro 2 339 115, et dans ces conditions, il ne fera pas l'objet d'une nouvelle description.

On comprend de la description qui précède que l'invention apporte un distributeur à tiroirs multifonction modulaire d'une grande souplesse de réalisation et de fonctionnement. Par ailleurs, il permet sans multiplier les modèles, de pouvoir réaliser différents types de distributeurs par simple modification du nombre de modules qui en constitue le corps.

Il demeure bien entendu que la présente invention n'est nullement limitée aux exemples de réalisation décrits ou représentés mais qu'elle en englobe toutes les variantes. C'est ainsi notamment que le système de commande du tiroir de distribution décrit ci-dessus peut être d'un autre type, par exemple à commande manuelle, etc.

## Revendications

1. Distributeur pneumatique ou électropneumatique multifonction du type à tiroir constitué par l'alignement, l'assemblage et le verrouillage les uns à la suite des autres avec interposition de joints, de modules (10) munis chacun d'un alésage central (12) au travers duquel peut coulisser le tiroir de distributeur (14), chaque module étant pourvu des voies de passage (16) pour le fluide de commande de manière que les modules constituent après assemblage et verrouillage le corps du distributeur dont les extrémités sont obturées par des couvercles (40, 42) recevant les organes de commande et de rappel du tiroir, caractérisé en ce que :
    – chaque module (10) comporte au moins un orifice (11) venant se positionner sur une embase reliée au dispositif commandé par le distributeur;
    – les modules assemblés sont protégés par une enveloppe extérieure (30) formant armature ;
    – les modules et les couvercles d'extrémités (40, 42) sont verrouillés les uns sur les autres par encliquetage à l'aide de pattes (18) et de tétons associés (20) ;
    – on prévoit entre les différents modules (10) des logements (50, 52) destinés à recevoir les écrous de fixation des pilotes, ces écrous devenant imperdables lorsque l'enveloppe extérieure (30) vient recouvrir le corps du distributeur constitué par l'assemblage de différents modules (10) et ;
    – le montage sur l'embase reliée au dispositif à commander s'effectue par l'intermédiaire de vis de montage logées dans des alésages (44) et immobilisées à l'aide de pattes (46) prévues sur les modules (10) venant faire saillie dans lesdits alésages (44).

2. Distributeur pneumatique ou électropneumatique multifonction du type à tiroir selon la revendication 1, caractérisé en ce que les modules (10) et les couvercles (40, 42) sont réalisés en matière plastique et l'enveloppe extérieure (30), formant armature, est métallique.

3. Distributeur pneumatique ou électropneumatique multifonction du type à tiroir selon l'une quelconque des revendications précédentes, caractérisé en ce que le système de joint qui assure l'étanchéité dans le corps du distributeur entre le tiroir (14) et l'assemblage des modules alignés (10) constituant ledit corps comporte un joint torique classique (26) et un joint en T (28).

4. Distributeur pneumatique ou électropneumatique multifonction du type à tiroir selon l'une quelconque des revendications précédentes, caractérisé en ce que le distributeur comporte sur sa face supérieure des joints d'étanchéité (54) qui sont conçus de façon à servir de sélecteurs de circuit de pilotage selon la position qui leur est donnée.

5. Distributeur pneumatique ou électropneumatique multifonction du type à tiroir selon l'une quelconque des revendications précédentes, caractérisé en ce que les modules comportent sur la face qui délimite le plan de pose du distributeur et qui est fixée sur une embase, un logement pour un joint (13), de préférence réalisé en plusieurs éléments de forme oblongue liés les uns aux autres, interposé entre le plan de pose et ladite embase.

## Ansprüche

1. Pneumatischer oder elektropneumatischer Mehrzweckverteiler mit einem Schieber, hergestellt durch Ausrichten, Zusammenbauen und Verriegeln von Modulen (10) miteinander unter Zwischenlegen von Dichtungen, wobei diese Module jeweils mit einer zentralen Bohrung (12) ausgestattet sind, durch die der Steuerschieber (14) gleiten kann und wobei jedes Modul mit Leitungskanälen (16) für das Betätigungsfluid ausgestattet ist, so daß die Module nach dem Zusammenbau und Verriegeln den Verteilerkörper bilden, dessen Ende durch Deckel (40,42) verschlossen sind, welche das Betätigungsorgan und das Rückholorgan für den Schieber aufnehmen, dadurch **gekennzeichnet, daß**
    – jedes Modul (10) mindestens eine Öffnung (11) besitzt, die auf einer Befestigungsfläche zu liegen kommt, welche mit der durch den Verteiler betätigten Vorrichtung verbunden ist,
    – die zusammengebauten Module durch eine ein Schutzgehäuse bildende äußere Hülle (30) geschützt sind,
    – die Module und die Deckel am Ende (40, 42) miteinander durch Einrasten unter Mitwirkung von Befestigungslaschen (18) und dazugehörigen Zapfen (20) verriegelt sind,
    – zwischen den verschiedenen Modulen (10) Ausnehmungen (50, 52) vorgesehen sind, welche die Muttern von Fixierungsstiften aufnehmen, wobei diese Muttern unverlierbar werden, sobald die äußere Hülle (30) den durch Zusammenbau der verschiedenen Module (10) hergestellten Verteilerköper bedeckt und
    – die Montage auf der mit der zu betätigenden Vorrichtung verbundenen Befestigungsfläche mit Hilfe von Befestigungsschrauben bewerkstelligt ist, die in Bohrungen (44) angebracht sind und mit Hilfe von an den Modulen (10) vorgesehenen Befestigungslaschen (46) immobilisiert sind, welche in diese Bohrungen (34) hineinragen.

2. Pneumatischer oder elektropneumatischer Mehrzweckverteiler mit einem Schieber nach Anspruch 1, dadurch **gekennzeichnet,** daß die Module (10) und die Deckel (40, 42) aus einem Kunststoffmaterial gefertigt sind und die äußere Hülle (30), welche ein Schutzgehäuse bildet, aus Metall gefertigt ist.

3. Pneumatischer oder elektropneumatischer Mehrzweckverteiler mit einem Schieber nach einem der vorhergehenden Ansprüche, dadurch **gekennzeichnet,** daß das Dichtungssystem, welches eine Abdichtung im Verteilerkörper zwischen dem Schieber (14) und der Einheit aus diesen Körper bildenden aneinandergereihten Modulen (10) sicherstellt, einen klassischen O-Ring (26) und eine T-förmige Dichtung (28) aufweist.

4. Pneumatischer oder elektropneumatischer Mehrzweckverteiler mit einem Schieber nach einem der vorhergehenden Ansprüche, dadurch **gekennzeichnet**, daß der Verteiler auf seiner Oberseite Abdichtungen (54) besitzt, die derart ausgestaltet sind, daß sie je nach der ihnen gegebenen Position zur Festlegung des Steuerkreislaufs dienen.

5. Pneumatischer oder elektropneumatischer Mehrzweckverteiler mit Schieber nach einem der vorhergehenden Ansprüche, dadurch **gekennzeichnet**, daß die Module auf der Seite, die die Auflagefläche des Verteilers begrenzt und die auf einer Befestigungsfläche fixiert ist, eine Ausnehmung für eine Dichtung (13) besitzen, die vorzugsweise aus mehreren miteinander verbundenen länglichen Elementen besteht und zwischer der Auflageebene und der Befestigungsfläche angeordnet ist.

## Claims

1. Multifunctional pneumatic or electropneumatic distributor of the slide-valve type, constituted by the alignment, assembling and locking together, one after another with interposition of seals, of modules (10) each equipped with a central bore (12), through which the distributor slide (14) can slide, each module being provided with ducts (16) for the control fluid in such a manner that the modules constitute, after assembly and locking together, the body of the distributor, the ends of which are obturated by covers (40, 42) accommodating the control and restoring members for the slide, characterized in that :
   – each module (10) comprises at least one orifice (11) to be positioned on a seating connected to the device controlled by the distributor ;
   – the assembled modules are protected by an outer envelope (30) forming a casing ;
   – the modules and the end covers (40, 42) are locked together by engagement by means of lugs (18) and associated studs (20) ;
   – between the different modules (10), seatings (50, 52) are provided, intended for receiving the fixing nuts for the control pipes, these nuts becoming imprisoned when the outer envelope (30) covers the body of the distributor formed by the assembly of the different modules (10) and ;
   – the mounting on the seating connected to the device to be controlled is effected by means of mounting screws housed in bores (44) and immobilized by means of lugs (46) provided on the modules (10) and projecting into said bores (44).

2. Multifunctional pneumatic or electropneumatic distributor of the slide-valve type according to Claim 1, characterized in that the module (10) and the covers (40, 42) are constructed of plastics material and the outer envelope (30), forming a casing, is of metal.

3. Multifunctional pneumatic or electropneumatic distributor of the slide-valve type according to any one of the preceding Claims, characterized in that the seal system which assures sealing in the body of the distributor between the slide (14) and the assembly of aligned modules (10) constituting said body comprises a conventional toroidal seal (26) and a T-shaped seal (28).

4. Multifunctional pneumatic or electropneumatic distributor of the slide-valve type according to any one of the preceding Claims, characterized in that the distributor comprises, on its upper face, seals (54) which are designed to serve as pilot circuit selectors according to the position which is given to them.

5. Multifunctional pneumatic or electropneumatic distributor of the slide-valve type according to any one of the preceding Claims, characterized in that the modules comprise, on the face which bounds the supporting plane of the distributor and which is fixed onto a seating, a recessed seating for a seal (13), preferably formed in several elements of oblong shape connected to one another, this seal being interposed between the supporting plane and said seating.

Fig.1

Fɪɢ.3

Fɪɢ.2

Fɪɢ.4

Fig.5